# FASCICULE DE BREVET EUROPEEN

(11) **EP 1 744 990 B1**
(45) Date de publication et mention de la délivrance du brevet: **14.11.2018**
(21) Numéro de dépôt: 05763708.4
(22) Date de dépôt: 29.04.2005
(51) Int. Cl.: C02F 1/00, C02F 1/68, C02F 9/00, C02F 1/48

(54) **PROCÉDÉ DE TRAITEMENT ÉLECTROMAGNÉTIQUE DE L'EAU LUI DONNANT UNE ACTIVITÉ BIOLOGIQUE**
VERFAHREN ZUR ELEKTROMAGNETISCHEN AUFBEREITUNG VON WASSER MITTELS VERWENDUNG EINER BIOLOGISCHEN AKTIVITÄT DARAUF
METHOD FOR ELECTROMAGNETIC TREATMENT OF WATER CONFERRING A BIOLOGICAL ACTIVITY THEREON

(30) Priorité: 29.04.2004 FR 0404588
(43) Date de publication de la demande: 24.01.2007
(73) Titulaire: VALLEE, Philippe, 75013 Paris (FR)
(72) Inventeur: VALLEE, Philippe, 75013 Paris (FR)
(74) Mandataire: Laget, Jean-Loup
(86) Numéro de dépôt international: PCT/FR2005/001080
(87) Numéro de publication internationale: WO 2005/115921

(56) Documents cités:
- WO-A-02/058449
- US-A- 5 326 446

## Description

La présente invention concerne un procédé de traitement physique de l'eau lui donnant des propriétés physico-chimiques (entre autres : modification de la luminescence intrinsèque, du potentiel Zêta) et biologiques spécifiques. Plus précisément, elle permet d'acquérir d'une part une activité biologique (comme par exemple l'accélération de la croissance de végétaux), d'autre part d'améliorer la biodisponiblité et l'efficacité de principes actifs faiblement dilués ainsi que de dépolluer différents types d'eaux, qu'elles proviennent des circuits de distribution traditionnels ou en amont, dans le cadre des stations traditionnelles d'épuration.

L'eau est à l'origine de toute une série de processus géologiques, climatiques et surtout à base de toute forme de vie. En effet, elle est le constituant majoritaire de tous les organismes vivants (50% à 98%) ; le corps humain en contient 70% de la masse totale. La biosphère dans sa totalité est constituée à 80% d'eau. Bien que ce soit un des liquides les plus étudiés, ses propriétés comportant de nombreuses anomalies ne sont pas encore toutes élucidées. Elle joue un rôle essentiel au niveau de la structure et du métabolisme de tous les êtres vivants. Ce rôle biologique est dû à ses propriétés physiques et chimiques hors du commun. Bernal et Flower ont établi une règle définissant que chaque atome d'oxygène a comme voisins deux hydrogènes et chaque liaison hydrogène contient un atome d'hydrogène. La dissociation des molécules d'eau liquide engendre la formation d'ions hydroxyles (OH⁻) et d'ions hydroniums (H₃O⁺), qui entrave cette règle. L'apparition des ions OH⁻ et H₃O⁺ engendre des « défauts ioniques » dans la structure de l'eau (Bernal, J. and Fowler, R. (1933). "A theory of water and ionic solution, with particular reference to hydrogen and hydroxyl ions." Journal of Chemical Physics 1(8): 515-548.). En l'absence de champ électrique, il existe un équilibre entre les ions hydroxyles et les ions hydroniums. Si on fait passer un champ électromagnétique polarisant dans l'eau, ces deux ions se déplacent indépendamment et l'équilibre est rompu. Ces charges ioniques peuvent aller s'adsorber par exemple sur des particules colloïdales.

Le potentiel Zêta est défini comme le potentiel électrique correspondant à la différence de potentiel entre la couche de Stern composée d'ions adsorbés sur la particule et la couche diffuse composée de contre-ions. Les substances colloïdales peuvent être définies par exemple comme étant des particules micrométriques ou nanométriques, des micro-organismes, des cellules ou bien des bulles de gaz ayant été formées dans l'eau. Plus le potentiel Zêta est élevé à la surface des colloïdes, plus le potentiel électrique autour de ces particules est grand. Quelques travaux semblent indiquer que le traitement électromagnétique diminuerait le potentiel Zêta, que ce soit avec un champ électrique de 44MHz (Chibowski, E., Holysz, L. and Wojcik, W. (1994) "Changes in zeta potentiel and surface free energy of calcium carbonate due to exposure to radiofrequency electric field." Colloids and Surfaces A: Physicochemical and Engineering Aspects 92: 79-85.) ou un champ magnétique statique d'intensité supérieure à 0,3T (Higashitani, K., Iseri, H., Okuhara, K., Kage, A. and Hatade S. (1995) "Magnetic Effects on Zeta Potential and Diffusivity of Nonmagnetic Colloidal Particles." Journal of Colloid and Interface Science 172(2): 383-388). L'adsorption des charges ioniques (comme les ions OH⁻, HCO₃⁻, CO₃²⁻) sur les bulles de gaz peut générer la formation d'agregats, dénommés clusters de molécules d'eau ionisées en tant que contre-ions au niveau de la couche interfaciale eau/gaz.

Or jusqu'à présent, l'addition de substances chimiques comme des tensio-actifs (par exemple l'ester de polyéthylène glycol) est couramment utilisée pour modifier la polarisation de la membrane de cellules. Cette technique engendre des effets secondaires dus aux substances chimiques utilisées.

Dans les procédures classiques de purification de l'eau, il est couramment utilisé des substances chimiques comme le chlore ou l'ozone qui peuvent engendrer des substances dérivées ayant des effets secondaires importants.

D'autres effets secondaires sont observés avec les substances chimiques biologiquement actives utilisés que ce soit dans le cadre médical ou dans celui de l'environnement (pesticides).

L'invention a pour but de proposer un procédé de traitement de l'eau évitant les inconvénients précédents.

L'invention a pour objet un procédé de traitement de l'eau pour la rendre biologiquement active comportant les étapes suivantes :
- prendre de l'eau sanitaire,
- purifier l'eau,
- mettre l'eau en présence de gaz et/ou d'aérosols dans une enceinte en silice pure,
- appliquer à l'eau un champ magnétique alternatif, pulsé, pendant des premières périodes de temps de durée réglable, les caractéristiques du champ magnétique étant constantes pendant chaque première période de temps et variant d'une première période à une autre,
- appliquer à l'eau un champ électrique alternatif, pulsé, pendant des secondes périodes de temps de durée réglable, les caractéristiques du champ électrique étant constantes pendant chaque seconde période de temps et variant d'une seconde période à une autre,
- utilisation de l'eau ainsi traitée pour une application biologique.

Selon d'autres caractéristiques :
- les gaz sont pris dans le groupe suivant : azote, oxygène, dioxyde de carbone, gaz inerte comme l'argon, hydrogène, purs ou en mélange et introduits à une pression et à une température supérieures à celles de l'eau,
- les aérosols sont pris dans le groupe de substances minérales ou organiques ayant une action biologique à potentialiser, de préférence : solution de substances colloïdales, d'anti-oxydants, de vitamines, d'acides aminés, d'acides gras oméga 3, solution hydro-alcoolique d'huiles essentielles,
- la teneur des substances minérales ou organiques est préférentiellement comprise entre 1ppt et 1000ppm ; le degré d'hygrométrie dans l'enceinte étant compris entre 40 et 100% et défini selon l'activité de l'eau desdites substances,
- le champ magnétique a une intensité comprise entre 0,01G et 10KG, et le champ électrique a une intensité comprise entre 1 V/m et 1KV/m,
- les champs magnétique et électrique ont une fréquence inférieure à 50MHz et de préférence inférieure ou égale à 25MHz,
- les premières et les secondes périodes de temps sont d'une durée réglable entre 1s et 24h,
- les premières périodes de temps et les secondes périodes de temps sont de même durée ou de durées différentes,
- en outre le procédé comporte une étape consistant à soumettre l'eau à un rayonnement électromagnétique de préférence polarisé dont le spectre s'étend de l'Ultra Violet à l'Infra Rouge, et dont l'intensité est au moins égale à 1mW/cm²,
- l'eau sanitaire est à une pression supérieure à 3 Bar et elle est purifiée jusqu'à avoir une résistivité de 18,2MOhms.cm à 25°C et une teneur en composés organiques totale inférieure à 30 ppb, de préférence inférieure à 1ppb, la dernière étape de purification étant une ultra-filtration avec un seuil de coupure au plus égal à 13000 Daltons,

Avantageusement,les gaz comportent un gaz neutre comme l'argon dans une proportion de 0,1 à 90% du volume total et du dioxyde de carbone en quantité entre 20 et 3500 ppm et l'enceinte où s'effectue la préparation est en silice pure de façon à libérer seulement de la silice colloïdale dans l'eau purifiée et si besoin d'en ajouter.

D'autres avantages, caractéristiques et détails apparaîtront plus clairement à l'aide de la description explicative qui va suivre faite en référence aux figures annexées.

A titre d'exemple, on a représenté différents résultats illustrant l'action du traitement électromagnétique sur l'eau :
- Figure 1 : spectres de diffusion élastique et inélastique de la lumière (diffusion Raman "basse fréquence") de l'eau témoin et de l'eau traitée,
- Figure 2 : spectres de diffusion élastique et inélastique et inélastique de la lumière (diffusion Raman "basse fréquence") de l'eau témoin et de l'eau traitée, selon trois modes différents de réalisation du traitement,
- Figure 3 : spectres de diffusion élastique de la lumière à 488nm (normalisés sur la bande Raman) de l'eau traitée comparée à l'eau témoin,
- Figure 4 : spectres de diffusion élastique de la lumière à 310nm (normalisés sur la bande Raman vers 345nm) de l'eau témoin et traitée de la série A d'essais,
- Figure 5 : spectres de photoluminescence excitée à 310nm (normalisés sur la bande Raman de 345nm) de l'eau témoin et traitée de la série A d'essais,
- Figure 6 : spectres de photoluminescence excitée à 310nm (normalisés sur la bande Raman de 345nm) de l'eau témoin et traitée de la série B d'essais,
- Figure 7 : spectres de photoluminescence excitée à 260nm (normalisés sur la bande Raman de 285nm) de l'eau témoin et traitée de la série B d'essais,
- Figure 8 : cinétique du taux de germination de graines de poireaux (incubées à 20°C) arrosées par de l'eau traitée comparée à l'eau témoin,
- Figure 9 : effet de différents types de traitements électromagnétiques sur de l'eau servant de milieu pour suivre la cinétique du taux de germination de graines d'avoines dormantes incubées à 30°C.

Cette invention est relative à un procédé d'obtention d'eau ayant des propriétés physico-chimique et biologique spécifiques liées au traitement physique appliqué. Ledit traitement physique appliqué est une association de traitement électromagnétique de basse fréquence (< 50MHz) et de hautes fréquences (ondes lumineuses) dont l'étendue spectrale va de l'ultra-violet à l'infra-rouge, comme par exemple le domaine spectral d'une lampe Xénon. L'onde lumineuse utilisée peut être un laser à multi-raies, comme par exemple un laser à Argon. On peut être amené à combiner à ces champs magnétique et/ou électrique (composés par une association de fréquences) un traitement acoustique de même domaine fréquentiel.

Le traitement électromagnétique est appliqué à l'eau par une ou plusieurs bobines, plongées dans celle-ci, ou préférentiellement entourant le contenant qui sera de préférence en silice pure. Si un autre contenant est utilisé, ce sera plutôt un polymère synthétique transparent au spectre lumineux cité dans l'invention répondant aux nonnes pharmaceutiques à condition d'ajouter un sel de silice méthylé à une teneur comprise entre 1ppb et 1000ppm dans l'eau purifiée. Si on prend plus d'une bobine, on les orientera de façon perpendiculaire ou parallèle selon le résultat souhaité. Celles-ci peuvent être des solénoïdes, des bobines d'Helmoltz, plates, toroïdales. Le signal du champ magnétique est délivré par la ou les bobine(s) et s'effectue au sein d'un champ électrique, de même gamme de fréquence, de préférence alternative, d'intensité comprise entre 1V/m et 1KV/m. Il existe en permanence un champ magnétique statique correspondant principalement au champ géomagnétique qui s'ajoute au champ électromagnétique pulsé. Le traitement physique est donc essentiellement la combinaison d'un champ électrique et d'un champ magnétique pulsés modulés pendant un temps donné entre 1s et plus de 24h, selon le volume traité. Les ondes émises peuvent être des ondes de type triangle, trapèze, hélicoïdale ou une série de salves à déclin exponentiel sous forme de trains d'ondes, elles seront préférentiellement carrées ou sinusoïdales émises par impulsion bipolaire. La composition fréquentielle utilisée est constituée d'harmoniques paires et/ou impaires des fréquences fondamentales suivantes : 0,1Hz, 0,25Hz, 0,333Hz, 60Hz, 80Hz, 130Hz, 145Hz, 175Hz, 220Hz, 260Hz, 1KHz, 1,6kHz, 2kHz, 2,2kHz, 3kHz, 50kHz, 11,8MHz, 17 à 18MHz, 21MHz, 23,6MHz ainsi que des sous multiples et/ou des multiples des fréquences suivantes 3.3Hz, 4Hz, 7.8Hz, 9Hz, 10Hz, 11Hz, 14Hz, 17Hz, 20Hz, 24Hz, 26Hz, 27Hz, 33Hz, 39Hz, 45 Hz. Le traitement électromagnétique est appliqué dans un environnement électromagnétique bien défini (cage de Faraday avec à l'intérieur un double blindage magnétique en mumétal ainsi qu'une triple isolation acoustique). La composition fréquentielle des différentes impulsions électromagnétiques est optimisée pour le type d'application mais reste préférentiellement inférieure à 50 MHz pour ce qui concerne le traitement basse fréquence.

L'eau est de préférence ultra-pure obtenue par une première étape d'osmose inverse puis par « polissage » (résines échangeuses d'ions, charbon actif synthétique, filtres, par exemple) afin d'avoir une résistivité de 18,2MΩ.cm à 25°C et une teneur en composés organiques « polluants » inférieure à 30ppb, de préférence inférieure à 1ppb (exempt de Dnase, de Rnase et d'endotoxines grâce à un ultra-filtre ayant un seuil de coupure au plus de 13000Daltons), conditionnée dans un contenant en silice dans une atmosphère gazeuse de vapeur d'eau pure, composée de préférence d'un mélange gazeux d'oxygène à 20,9% et qsp d'azote ultra-pur, filtré à 0,2µm, contrôlée (pression supérieure à 1 Bar, degré hygrométrique compris préférentiellement entre 40 et 100%,) additionnée de dioxyde de carbone (de préférence de 20 à 3500 ppm), d'argon (de préférence entre 0,1% et 90% de la teneur totale en gaz) et si besoin d'hydrogène (ou bien de peroxyde d'hydrogène), le tout à l'abri de la lumière naturelle ou artificielle. D'autres paramètres de préparation de l'eau sont contrôlés comme la température de l'eau qui sera comprise entre 0 et 95°C, préférentiellement entre 0 et 45°C et celle de l'air plus élevée d'au moins 0,5°C. L'eau peut être aussi en circulation : elle séjourne suffisamment longtemps dans le champ électromagnétique, le débit est suffisamment élevé (environ de l'ordre de 1,51/min) et la vitesse du flux est comprise entre 0,5m/s et 5 m/s avec un optimum autour de 3m/s. Afin d'augmenter l'effet du traitement électromagnétique, on induira à l'eau un mouvement hélicoïdal sous pression avant qu'elle subisse l'action des champs électromagnétiques dans la chambre de traitement. L'avantage de ce système en flux permet de pouvoir traiter des volumes plus importants mais il faut prévoir une synchronisation des trains d'impulsions avec la vitesse et le débit d'écoulement ainsi que prendre en considération les contraintes hydrodynamiques, les facteurs de correction de l'intensité des champs appliqués et de la durée d'exposition.

C'est lors de cette étape de préparation de l'eau que l'on introduit, après dégazage si besoin, une ou des substances à potentialiser, préalablement diluées dans l'eau pure, sous forme d'aérosols dans l'enceinte de préparation de l'eau où le degré d'hygrométrie (ou le point de rosée) sera contrôlé et bien défini selon la substance active. Il est utile de jouer sur le temps de contact avec les gaz présents dans l'enceinte ainsi que sur la teneur incorporée entre 1ppt et 1000ppm. Les substances actives sont des substances organiques ou minérales sous forme colloïdale, par exemple de la silice colloïdale comme le sel de silice méthylé, ou d'un silicium organique (comme par exemple le monométhyl silane triol).

La solution aqueuse ainsi obtenue subit le premier traitement électromagnétique de basse fréquence dans la cage de Faraday et est ensuite, si nécessaire, traitée avec une onde lumineuse plutôt de nature cohérente et polarisée de fréquence de l'ordre du teraHertz, comme par exemple les deux raies majeures de 488nm et 514nm d'un laser Argon, à une intensité d'au moins 1mW/cm² et de préférence de 20 à 150mW/cm². On peut être amené à effectuer le traitement électromagnétique basse fréquence et haute fréquence (ondes lumineuses) directement sur l'environnement gazeux avant que celui-ci se dissolve dans l'eau ultra-pure.

Le dispositif permettant l'obtention de l'eau traitée tel qu'il vient d'être décrit pourrait être modifié, par nécessité pour une application dérivée, dans toutes ses dimensions sans pour cela sortir du cadre de l'invention.

Afin d'illustrer quelques effets du traitement électromagnétique sur les propriétés physico-chimiques de l'eau, des mesures expérimentales ont été effectuées. Ces mesures mettent en évidence une baisse importante de l'intensité de la diffusion élastique de la lumière et de la luminescence intrinsèque de l'eau après le traitement électromagnétique.

En effet l'expérience de photoluminescence, selon les conditions de préparation, a permis de mettre en évidence la luminescence inhérente à l'eau des échantillons non dégazés. Une réduction de cette photoluminescence des échantillons ayant subi l'action du traitement électromagnétique a été observée. De plus après dégazage de l'eau pure, l'effet du traitement électromagnétique sur cette luminescence n'est plus observé. Cette luminescence pourrait être donc liée à la modification de l'organisation des molécules d'eau au niveau des défauts de structure que peuvent être les bulles. Cette expérience de photoluminescence, lorsque l'on s'intéresse à la longueur d'onde de la lumière excitatrice, devient aussi une expérience d'investigation de la diffusion élastique de la lumière toujours à 90°. L'effet sur la diffusion élastique de la lumière peut avoir des origines multiples en relation, en tout cas, avec une diminution de la taille et/ou du nombre des éléments diffuseurs. Ces diffuseurs sont des bulles de gaz de tailles nanométriques (d'environ 200 à 600 nm) qui, vraisemblablement, se forment autour de sites de nucléation pouvant être des composés organiques. La fixation des molécules de gaz autour des substances organiques non chargées, n'entrave pas la mobilité ou le transport massique des protons H⁺ amélioré par le champ électromagnétique. Et selon la loi de Laplace, plus la taille des bulles est petite, plus les contraintes appliquées sont importantes engendrant une forte structuration des molécules d'eau sous forme de clusters autour de ces bulles. Ainsi suivant la taille des bulles modifiée par le traitement électromagnétique, une évolution du nombre de molécules d'eau structurée autour de celles-ci peut être observée. Ce qui pourrait être une des explications de l'effet de l'eau traitée sur un système biologique.

Dans le cadre de l'invention, on choisit préférentiellement des composés organiques ayant une vertu thérapeutique, comme, par exemple, des vitamines, des acides gras oméga-3, des huiles essentielles qui sont dissous dans une solution hydro-alcoolique ultra-pure pulvérisée dans la phase gazeuse lors de la préparation des échantillons d'eau pure. Des substances minérales colloïdales ayant une action thérapeutique comme par exemple le sélénium en tant qu'anti-oxydant, le lithium, le magnésium, le cuivre, l'argent, l'or, la silice peuvent aussi être utilisées.

L'accumulation de charges ioniques sur ces bulles de gaz par l'action combinée du champ électrique et du champ magnétique alternatifs pulsés à durée modulée, appliquée selon l'invention, engendre la perturbation de la distribution des charges et l'augmentation du potentiel électrique autour de ces nanobulles jusqu'à un seuil de claquage qui entraîne l'effondrement de ces nanobulles de gaz présentes. Cet effondrement peut générer l'ionisation des gaz présents dans la bulle et favoriser, par recombinaison, la formation d'autres espèces chimiques comme le peroxyde d'hydrogène, les radicaux hydroxyles, les ions hydrogènes et augmenter aussi la biodisponibilité des clusters d'eau ionisés qui facilite les échanges extra et intracellulaires, ainsi que les réactions biochimiques, au sein d'un organisme vivant tel que le corps humain.

L'invention permet grâce à la combinaison des champs électrique et magnétique pulsés de provoquer une accumulation des charges à la surface de toutes sphères comme des cellules ou des bulles de gaz présentes dans la solution aqueuse sans avoir recours à l'ajout de tensio-actifs ou en minimisant leurs concentrations. Le procédé permet entre autre la formation d'ions négatifs, de clusters de molécules d'eau ionisés. Favorisant les échanges extra et intracellulaires, cette eau accélère la croissance naturelle des plantes et est applicable à tout type d'agriculture.

Cette présente invention peut être considérée comme un nouveau procédé technique de purification de l'eau de différents contaminants potentiels, comme tous types de micro-organismes, sans les effets secondaires de substances chimiques usuellement utilisées comme l'ozone, le chlore.

D'autres applications peuvent résulter dans le domaine agronomique et agroalimentaire (accélération de la croissance de plantes, meilleure biodisponibilité de principes actifs dilués dans l'eau), dans le domaine de l'environnement (dépollution de l'eau en la rendant biocompatible, action sur la vapeur d'eau par exemple des tours de refroidissement), dans le domaine des cosmétiques (par exemple pour l'obtention d'un meilleur pouvoir hydratant d'une émulsion), dans le domaine vétérinaire et médical (meilleure biodisponibilité de principes actifs dilués dans l'eau traitée, par exemple en tant qu'eau d'hémodialyse). Dans le cadre d'application cosmétique, d'autres composants hydratants tels que les émollients, humidifiants, les agents occlusifs ou bien les anti-oxydants, peuvent être intégrés dans la formulation de n'importe quelle forme galénique incorporant l'eau traitée, et convenable pour l'application topique sur la peau.

La présente invention permet aussi de diminuer la concentration de substances biologiquement ou chimiquement actives tout en augmentant leur efficacité, quelle que soit leur utilisation : traitement des eaux, domaine médical et vétérinaire, domaine cosmétique, domaine agroalimentaire ou agriculture (produits phytosanitaires).

Ces différents exemples ne sont là que pour illustrer l'étendue des champs d'applications et ne sont pas exhaustifs.

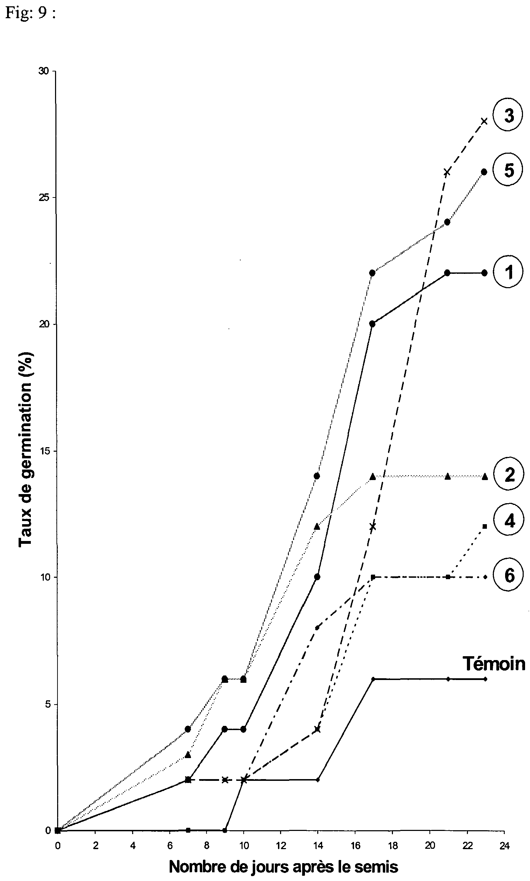

Présentation de quelques résultats et exemples d'application :
- Différents types de traitements électromagnétiques sont montrés ici à titre d'exemple :
   - Un type de traitement composé d'impulsions sinusoïdales de 220Hz alternées toutes les 10s avec des impulsions sinusoïdales pulsées à 80Hz pendant 3h puis une impulsion sinusoïdale à 175Hz pendant 3h. Le champ électromagnétique présent au centre de la bobine est de l'ordre d'une dizaine de Gauss, avec un champ magnétique statique d'environ 10 µT et un champ électrique E pulsé à 50Hz d'environ 10V/m. L'action de ce type de traitement sera suivie par différentiation de l'eau témoin et de l'eau traitée par 3 techniques de caractérisation : la diffusion élastique de la lumière, la photoluminescence et un test biologique : la germination de graines (cf. figures de 1 à 8).
   - D'autres types de traitements de l'eau sont étudiés sur la germination de graines d'avoine dormantes (cf. figure 9) :
      1. Echantillon 1: onde carrée de 1kHz, B=4,2G durée : 2h05, bobine verticale.
      2. Echantillon 2: onde sinusoïdale de 2kHz modulée par des impulsions carrées de 4s toutes les 12s, B=0,46G, bobine horizontale perpendiculaire au champ géomagnétique pendant 2h05.
      3. Echantillon 3: onde sinusoïdale de 2kHz, 3x30s action, puis 3x30s repos, B=14G, bobine verticale.
      4. Echantillon 4: onde sinusoïdale de 50Hz, 3x30s action, puis 3x30s repos, B=14G, bobine verticale.
      5. Echantillon 5: onde sinusoïdale de 2kHz modulée par des impulsions carrées de 3s toutes les 13s, B=0,46G, durée 3h30, bobine horizontale perpendiculaire au champ géomagnétique.
      6. Echantillon 6: onde sinusoïdale de 2kHz, 3x30s action, puis 3x30s repos, B=23G, bobine verticale.
- Spectres de diffusion inélastique et élastique de la lumière obtenus après traitement électromagnétique :
   Les spectres de diffusion inélastique (diffusion Raman) ont été enregistrés, à une longueur d'onde de 488nm à une puissance de 100mW, de l'échantillon d'eau de résistivité à 25°C de 18,2MΩ.cm préparée sous mélange d'air ultra-pur composé entre autres de 20,9% d'oxygène qsp azote, dans 3 domaines de mesures : basse fréquence : 30 à 1300 cm⁻¹, moyenne fréquence : 1300 à 2400 cm⁻¹, haute fréquence : 2800 à 3750 cm⁻¹.

Au niveau des hautes fréquences, les bandes 3200 et 3400 cm⁻¹ sont définies, couramment, comme correspondant respectivement à la vibration d'élongation symétrique et antisymétrique de la liaison OH de la molécule d'eau. Au niveau de ces deux bandes, aucune différence d'intensité de diffusion Raman entre l'eau de référence et l'eau traitée, ni de décalage au niveau de la position de ces bandes, n'a été mesurée. Il en est de même au niveau des moyennes fréquences : la bande 2120 cm⁻¹ est en général attribuée à la combinaison additive de la bande de 1640 cm⁻¹ (déformation angulaire de HOH de la molécule d'eau) et de la bande de 480 cm⁻¹ associée à des modes de vibration intermoléculaire.

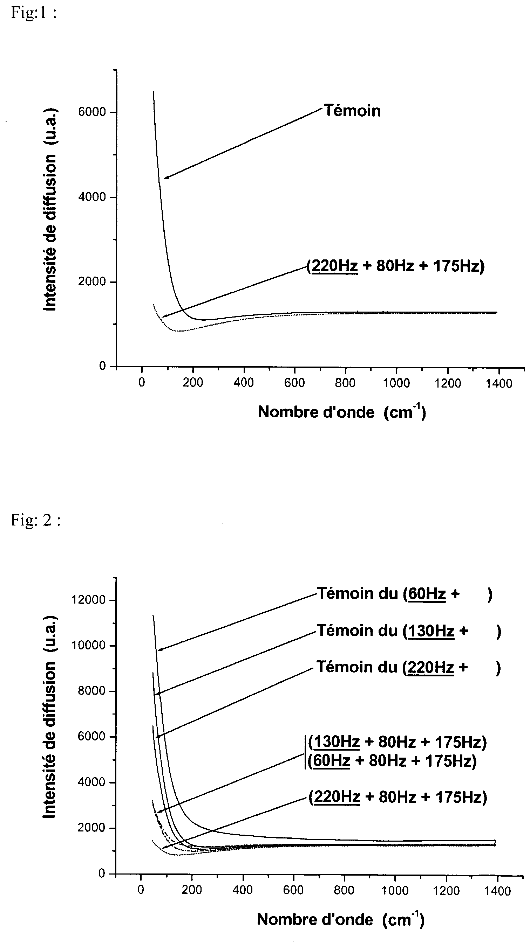

Par contre au niveau des basses fréquences, une diminution importante de l'intensité relative de diffusion [(I_{(traitée)}- I_{(témoin)}/I_{(témoin)}*100] est observée sur l'échantillon d'eau ayant subi le traitement électromagnétique, de -73% à 60 cm⁻¹ (énergie associée à la bande de vibration angulaire de la liaison OH intermoléculaire) et de -32% à 170 cm⁻¹ (énergie associée à la bande de vibration d'élongation de la liaison OH intermoléculaire), (cf. figure 1).

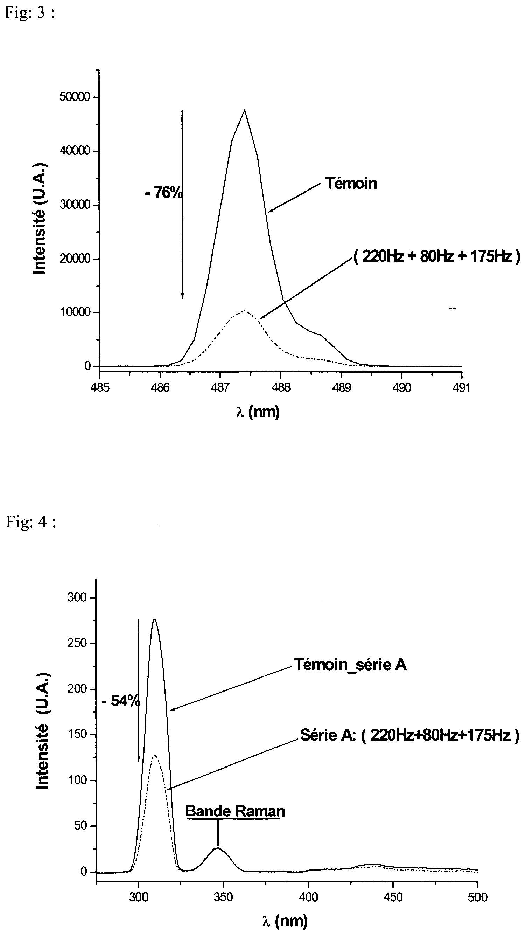

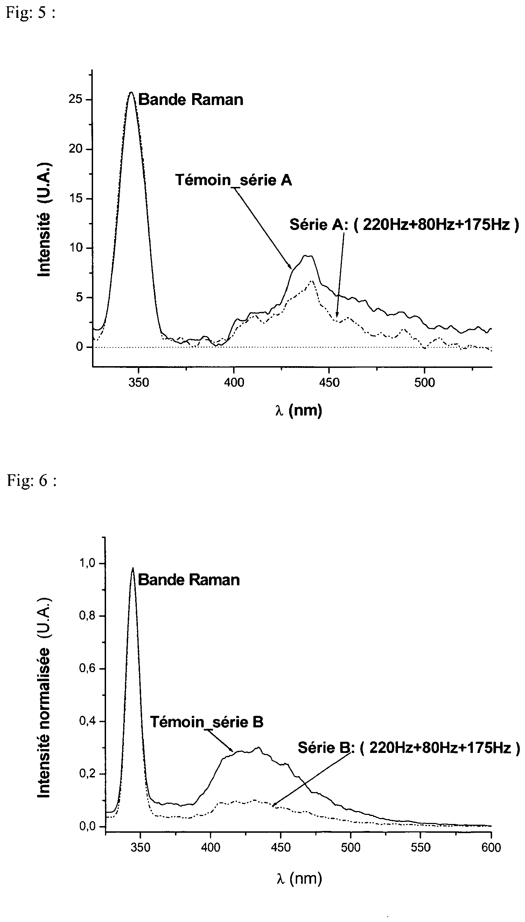

La première fréquence de 220Hz a été remplacée par la fréquence de 60Hz dans un premier temps puis par 130Hz dans la composition fréquentielle du premier type de traitement. Une diminution plus importante de la diffusion a été observée avec le traitement électromagnétique utilisant la fréquence 220Hz (cf. figure 2). Cette expérience a permis d'observer l'effet des fréquences de traitement choisies sur le même type d'eau préparée dans les mêmes conditions. La diffusion observée ici est, en réalité, la somme de la diffusion Raman et de la diffusion élastique de la lumière (due à la mauvaise élimination de la diffusion Rayleigh). C'est pourquoi des expériences de diffusion élastique de la lumière ont été effectuées afin de bien isoler et d'identifier l'action des champs électromagnétiques appliqués (cf. figure 3).
- Mesure de photoluminescence sur deux séries d'échantillons A et B :
   Deux séries d'expériences ont été effectuées sur deux appareils de spectroscopie différents. L'échantillon de la série A (mesuré 24h après traitement) a été analysé sur un appareil moins performant mais il a l'avantage de montrer sur le même spectre la diminution importante (-54%) de diffusion de la lumière à 310nm de l'échantillon traité comparativement au témoin alors qu'aucune différence au niveau de la bande Raman n'est observée ici vers 345nm (cf. figure 4). Un zoom de ce spectre au niveau de la bande Raman (cf. figure 5) permet d'observer une légère diminution de la bande de luminescence vers 440nm pour l'échantillon traité excité à 310nm.
   Dans la série B, certaines conditions de préparation de l'eau définies ont été changées de la façon suivante : mélange gazeux composé d'oxygène, d'azote, d'argon et d'un composé organique volatil, composé organique total # 1ppm, CO₂#300ppm, pH=5,9, hygrométrie #60%, surpression de l'eau dans le réseau lors de la préparation # 6Bar, différence de température entre l'air et l'eau d'environ 1°C, teneur en oxygène de l'eau 2ppm, l'eau ultra-pure est filtrée avec un ultrafiltre terminal éliminant tous les composés de masse moléculaire supérieure à 13000 Daltons.

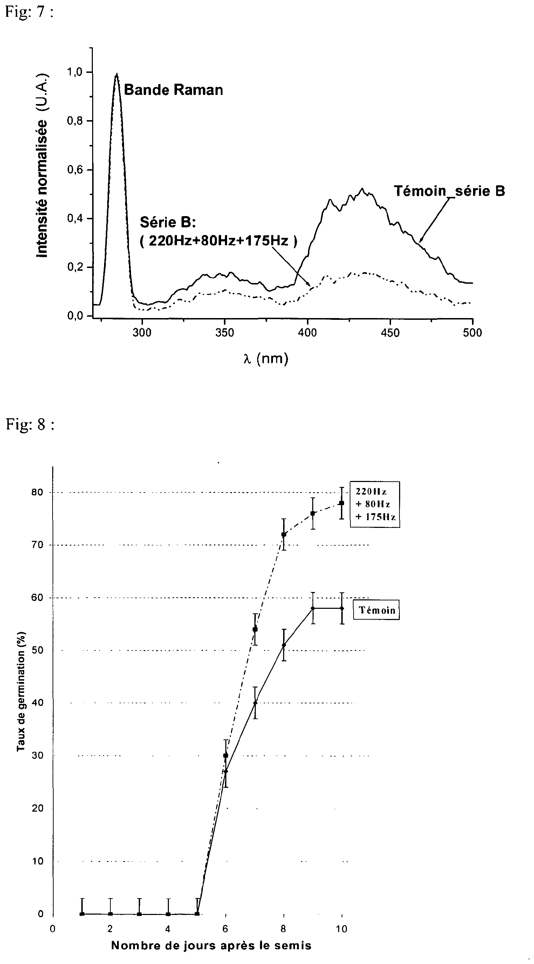

Après excitation des échantillons d'eau à 310nm, une bande de luminescence est aussi observée qui représente une intensité d'environ 30% de la bande Raman. Le sommet de cette bande de luminescence est aux alentours de 425nm (cf. figure 6). Après traitement électromagnétique, une forte diminution de l'intensité de cette luminescence intrinsèque d'environ 65% est trouvée. Après excitation à 260nm (cf. figure 7), deux larges bandes sont identifiées, l'une centrée vers 345nm avec une intensité de 20% de celle de la bande Raman et l'autre vers 425nm avec comme intensité 55% de celle de la bande Raman. Après traitement électromagnétique, une forte diminution d'intensité de luminescence de 64% de la bande centrée à 425nm est aussi observée.

Cette atténuation de la luminescence de l'eau peut s'expliquer par l'action des champs électromagnétiques sur les défauts structuraux de l'organisation des molécules d'eau dus à la présence de nanobulles. Comme pour la sonoluminescence, la formation de différentes espèces réactives dérivées (comme les ions superoxydes, les radicaux hydroxyles, peroxyde d'hydrogène, par exemple) peut être observée.

Après dégazage de l'eau, l'effet de l'action du traitement électromagnétique sur la diffusion élastique de la lumière ainsi que sur la luminescence des échantillons n'est plus observé. Dans les conditions de préparation citées ci-dessus, les impuretés éventuelles ioniques ou organiques résiduelles dans ces échantillons d'eau ayant une résistivité de 18,2MOhms.cm à 25°C ne peuvent induire la diffusion, ni la photoluminescence observée ; celles-ci pourraient alors provenir de nano-sphères de gaz en suspension dans l'eau. Leur taille et leur dispersion dépendraient principalement des conditions opératoires et d'environnement liées à la préparation de l'eau (température, pression, gaz).
- Expériences de suivi de germination de graines :
   Les études de caractérisation de l'effet biologique potentiel de cette eau traitée peuvent être des études dans lesquelles l'eau sert comme milieu de culture (par exemple pour la croissance d'algues) et aussi dans l'amélioration de la croissance de végétaux. Afin d'illustrer l'effet biologique, des expériences de suivi de germination de graines ont été réalisées. Le premier type de traitement (cité ci-dessus, avec 220Hz) permet d'augmenter d'environ 25% le nombre total de graines de poireau incubées à 20°C pour chaque série (cf. figure 8). Ce résultat est obtenu à partir d'une moyenne effectuée sur 4 séries d'expériences de 100 graines mises à germer (cf. barres d'erreur sur la figure 8).

Une autre série d'expériences a été effectuée avec des graines d'avoine dormantes incubées à une température de 30°C. D'autres types de traitement électromagnétique ont été testés sur l'eau qui a été utilisée pour faire germer ces graines. Pour ce type d'expérience, une accélération de la cinétique de germination et aussi une augmentation du pourcentage (d'environ 25% sur une vingtaine de jours) de graines d'avoine germées, en fonction du type de traitement appliqué, ont été trouvées.

## Revendications

1. Procédé de traitement de l'eau au moyen d'un champ électromagnétique de fréquence inférieure à 50kHz pour la rendre biologiquement active, comportant les étapes de :
- prendre de l'eau sanitaire,
- la purifier, jusqu'à avoir une résistivité de 18,2MOhms.cm à 25°C et une teneur en composés organiques totale inférieure à 30 ppb, de préférence inférieure à 1 ppb
- mettre l'eau dans une enceinte de préférence en silice pure,
**caractérisé en ce qu'**il comporte les étapes suivantes effectuées à l'abri de la lumière naturelle ou artificielle et de maniere à atteindre un potentiel électrique suffisant pour causer l'effondrement des bulles de gaz de taille comprise entre 200 et 600 nanométres :
- mettre l'eau en présence de gaz pris dans le groupe comprenant l'oxygène, l'azote, le dioxyde de carbone, l'hydrogène et l'argon, introduits à une pression et à une température supérieures à celles de l'eau et/ou d'aérosols,
- appliquer à l'eau un champ magnétique d'intensité comprise entre 0,01 G et 10 kG alternatif, pulsé, pendant des premières périodes de temps de durée réglable, entre 1 s et 24h les caractéristiques du champ magnétique étant constantes pendant chaque première période de temps et variant d'une première période à une autre ;
- appliquer à l'eau un champ électrique d'intensité comprise entre 1 V/m et 1kV/m alternatif, pulsé, pendant des secondes périodes de temps de durée réglable, entre 1 s et 24h les caractéristiques du champ électrique étant constantes pendant chaque seconde période de temps et variant d'une seconde période à une autre.

2. Procédé selon la revendication 1, **caractérisé en ce que** les aérosols sont pris dans le groupe de substances minérales ou organiques ayant une action biologique à potentialiser, de préférence: solution de substances colloïdales, d'anti- oxydants, de vitamines, d'acides aminés, d'acides gras oméga 3, solution hydro-alcoolique d'huiles essentielles.

3. Procédé selon la revendication 2, **caractérisé en ce que** la teneur des substances minérales ou organiques est préférentiellement comprise entre 1 ppt et 1000 ppm; le degré d'hygrométrie dans l'enceinte étant compris entre 40 et 100% et défini selon l'activité de l'eau desdites substances.

4. Procédé selon la revendication 1, **caractérisé en ce qu'**en outre il comporte une étape consistant à soumettre l'eau à un rayonnement électromagnétique de préférence polarisé dont le spectre s'étend de l'ultraviolet à l'infrarouge, et dont l'intensité est au moins égale à 1mW/cm2.

5. Procédé selon la revendication 1, **caractérisé en ce que** les gaz comportent un gaz neutre comme l'argon dans une proportion de 0,1 à 90% du volume total et du dioxyde de carbone de teneur comprise entre 20 et 3500 ppm.

6. Utilisation, pour l'accélération de la cinétique de germination et l'augmentation du pourcentage de graines germées, de l'eau obtenue par le procédé de traitement selon la revendication 1.

## Patentansprüche

1. Verfahren zur bioaktiven Wasseraufbereitung unter Verwendung eines elektromagnetischen Feldes im Frequenzbereich unter 50 kHz in folgenden Stufen:
- Einsatz von Leitungswasser
- Reinigung des Wassers, bis dieses einen spezifischen Widerstand von 18,2 MOhms.cm bei 25°C und einen Gesamtgehalt an organischen Bestandteilen von weniger als 30 ppb und vorzugsweise von weniger als 1 ppb aufweist
- Einfüllen des Wassers in einen Behälter, vorzugsweise aus reinem Quarzglas,
**dadurch gekennzeichnet, dass** es vor natürlichem bzw. künstlichem Licht geschützt die nachfolgenden Stufen durchläuft, bis eine ausreichend hohe elektrische Spannung erreicht ist, um den Zerfall der Gasblasen mit einer Größe von 200 bis 600 Nanometern zu bewirken:
- Versetzen des Wassers mit Gasen aus der Gruppe Sauerstoff, Stickstoff, Kohlendioxid, Wasserstoff und Argon, und zwar bei einem Druck und einer Temperatur, die über denen des Wassers und/oder der Aerosole liegen;
- Anlegen eines mit einer Stärke von 0,01 G bis 10 kG alternierenden Magnetfeldes, das gepulst ist, an das Wasser für erste, einstellbare Zeitspannen zwischen 1 Sek. und 24 Std., wobei die Eigenschaften des Magnetfeldes für die Dauer jeder ersten Zeitspanne konstant sind und von einer ersten Zeitspanne zur nächsten variieren;
- Anlegen eines mit einer Stärke von 1 V/m und 1 kV/m alternierenden elektrischen Feldes, das gepulst ist, an das Wasser für zweite, einstellbare Zeitspannen zwischen 1 Sek. und 24 Std., wobei die Eigenschaften des elektrischen Feldes während jeder zweiten Zeitspanne konstant sind und von einer zweiten Zeitspanne zur nächsten variieren.

2. Verfahren gemäß Anspruch 1, **dadurch gekennzeichnet, dass** die Aerosole aus der Substanzgruppe anorganischer oder organischer Verbindungen mit biologischer Optimierungswirkung ausgewählt werden, vorzugsweise: Lösung aus kolloidalen Substanzen, Antioxidantien, Vitaminen, Aminosäuren, Omega-3-Fettsäuren, wässerig-alkoholische Lösung aus ätherischen Ölen.

3. Verfahren gemäß Anspruch 2, **dadurch gekennzeichnet, dass** der Gehalt an anorganischen oder organischen Substanzen vorzugsweise zwischen 1 ppt bis 1000 ppm liegt, während die Luftfeuchtigkeit im Behälter zwischen 40 und 100% beträgt und je nach Wasseraktivität dieser Substanzen definiert wird.

4. Verfahren gemäß Anspruch 1, **dadurch gekennzeichnet, dass** es ferner eine Stufe umfasst, in der das Wasser vorzugsweise polarisierter elektromagnetischer Strahlung mit einem Spektrum von Ultraviolett bis Infrarot und einer Stärke von mindestens 1 mW/cm² ausgesetzt wird.

5. Verfahren gemäß Anspruch 1, **dadurch gekennzeichnet, dass** die Gase zu einem Anteil von 0,1 bis 90% des Gesamtvolumens ein neutrales Gas wie Argon und einen Kohlendioxidgehalt zwischen 20 und 3500 ppm aufweisen.

6. Verwendung von aus dem Behandlungsverfahren nach Anspruch 1 gewonnenem Wasser zur Beschleunigung der Keimungskinetik und zur Erhöhung des prozentualen Saatgutanteils.

## Claims

1. A process of treating water using an electromagnetic field of frequency less than 50 kHz to make it biologically active, comprising the steps of:
∘ Take sanitary water;
∘ Purify it until it has a resistivity of 18.2MOhms.cm at 25 °C and a total organic compound content of less than 30 ppb, preferably less than 1 ppb;
∘ Put the water in a chamber preferably of pure silica;
**characterized in that** it comprises the following steps, carried out away from natural or artificial light and so as to achieve an electrical potential sufficient to cause the collapse of gas bubbles of size between 200 and 600 nanometers:
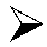 Put the water in the presence of gases taken from the group comprising oxygen, nitrogen, carbon dioxide, hydrogen and argon, introduced at a pressure and at a temperature higher than those of water and / or aerosols;
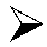 Apply to the water a pulsed alternating magnetic field of intensity of between 0.01G and 10kG during first periods of time of adjustable duration, between 1s and 24h, the characteristics of the magnetic field being constant during each first period of time and varying from one first period to another;
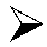 Apply to the water a pulsed alternating electric field of intensity between 1V/m and 1kV/m, for second periods of time of adjustable duration, between 1s and 24h the characteristics of the electric field being constant during each second period of time and varying from one second period to another.

2. Process according to claim 1, **characterized in that** the aerosols are taken from the group of mineral or organic substances having a biological activity to potentiate, preferably: solution of colloidal substances, antioxidants, vitamins, amino acids, omega 3 fatty acids, hydro-alcoholic solution of essential oils.

3. Process according to claim 2, **characterized in that** the content of mineral or organic substances is preferably between 1 ppt and 1000 ppm; the degree of hygrometry in the chamber being between 40 and 100% and defined according to the water activity of said substances.

4. Process according to claim 1, **characterized in that** it further comprises a step of submitting the water to, preferably polarized electromagnetic radiation whose spectrum extends from ultraviolet to infrared, and whose intensity is at least 1 mW/cm².

5. Process according to claim 1, **characterized in that** the gases comprise a neutral gas such as argon in a proportion of 0.1 to 90% of the total volume and carbon dioxide content between 20 and 3500 ppm.

6. Use, for the acceleration of the germination kinetics and the increase of the percentage of germinated seeds, of the water obtained by the treatment method according to claim 1.
